# EUROPÄISCHE PATENTANMELDUNG

(11) **EP 1 519 141 A2**
(43) Veröffentlichungstag der Anmeldung: **30.03.2005**
(21) Anmeldenummer: 04021150.0
(22) Anmeldetag: 06.09.2004
(51) Int. Cl.: G01B 11/25, H04R 25/02

(54) **Rundum-Scanner**

(30) Priorität: 25.09.2003 DE 10344922
(71) Anmelder: Siemens Audiologische Technik GmbH, 91058 Erlangen (DE)
(72) Erfinder: Doemens, Günter, Dr., 83607 Holzkirchen (DE); Forster, Frank, 80377 München (DE); Niederdränk, Torsten, Dr., 91056 Erlangen (DE); Rummel, Peter, 83703 Gmund (DE)
(74) Vertreter: Berg, Peter, Dipl.-Ing.

(57) **Zusammenfassung**

Durch die Erfindung soll ein kostengünstiger Rundum-Scanner zum dreidimensionalen Erfassen von Objekten und insbesondere zum Erfassen von Ohrabdrücken für die Herstellung von Hörgeräten geschaffen werden. Hierzu schlägt die Erfindung vor, ein Muster auf das auf einem Drehteller (10) positonierte Objekt mittels eines Projektors (12) zu projizieren und mittels einer Kamera (13) ein Objektbild zu erzeugen, in dem Abbildungen von kodierten Markierungen (14) vorhanden sind, die eine eindeutige Zuordnung der Lage des Objekts bezüglich des Projektors (12) und der Kamera (13) ermöglichen. Durch die Markierungen ist eine exakte Synchronisation der Drehbewegung des Objekts mit der Aufnahme der Objektbilder nicht erforderlich. Bei der Aufnahme wird der Drehteller gedreht und seine Drehachse (20) wird um eine weitere Achse (19) geschwenkt.

## Beschreibung

Die Erfindung betrifft ein Verfahren zur dreidimensionalen Erfassung eines Objekts. Ferner betrifft die Erfindung eine Vorrichtung zur Ausführung des Verfahrens und eine Verwendung der Vorrichtung und des Verfahrens.

Verfahren zur dreidimensionalen Erfassung und Digitalisierung von Objekten werden für verschiedene Anwendungszwecke eingesetzt, z.B. bei der Entwicklung, Herstellung und Qualitätskontrolle von industriellen Produkten und Bauteilen. In der Medizintechnik verwendet man beispielsweise optische Messverfahren zur Herstellung der Gehäuse im Ohr tragbarer Hörgeräte. Zur individuellen Anpassung eines Gehäuses an den Gehörgang eines Hörgeräteträgers werden dabei von einem Audiologen mittels einer kautschukähnlichen Plastikmasse Abdrücke vom äußeren Gehörgang des Patienten erstellt. Um zur Herstellung der Gehäuse stereo-lithografische oder ähnliche Verfahren anwenden zu können, müssen von den Ohrabdrücken dreidimensionale Computermodelle erstellt werden. Dieser Vorgang erfolgt bislang beim Hörgeräte-Hersteller. Dort werden die Abdrücke mit einem Präzisionsscanner dreidimensional rundum vermessen und auf der Basis dieser Daten ein 3D-Computer-Modell des äußeren Gehörgangs erstellt. Anschließend erfolgt in einem Laser-Sinter-Prozess die Herstellung der individuell geformten Gehäuseschale anhand der Daten des Computermodells.

Die verwendeten Präzisionsscanner sind meist als Laser-Scanner ausgebildet, bei dem ein Laser-Strahl kontrolliert über die Oberfläche des Abdrucks geführt wird und das rückgestreute Licht von einem Detektor (z.B. einer CCD-Kamera) aus einer vom Laser-Strahl abweichenden Richtung beobachtet wird. Die Oberflächenkoordinaten des Abdrucks werden dann per Triangulation berechnet. Bei dem bekannten Laser-Scanner VIVID 910 der Fa. Minolta wird aus dem Laser-Strahl eine Linie erzeugt, die über die Oberfläche des zu erfassenden Objekts, z.B. eines Ohrabdrucks, bewegt wird. Das Bild der Linie wird wiederum mit einer Kamera beobachtet, wobei aus der Deformation des Linienbildes durch Triangulation auf die Oberflächenkoordinaten des zu erfassenden Objekts geschlossen werden kann. Als Zubehör zu dem bekannten Laser-Scanner dient ein Drehteller (Rotary Stage Controller), auf dem sich das Objekt während der Abtastung um 360° dreht.

Nachteilig bei den bekannten Laser-Scannern sind deren hohe Anschaffungskosten, die mitunter auch durch die hochpräzise Mechanik der Drehteller verursacht werden.

Aus Frank Forster, Manfred Lang, Bernd Radig "Real-Time Range Imaging for Dynamic Scenes Using Colour-Edge Based Structured Light", ICPR '02, Vol. 3, pp. 30645-30648, 2002, ist ein Verfahren zur 3D-Erfassung eines Objekts mittels strukturiertem Licht bekannt. Dabei wird mittels eines Projektors ein Farbmuster, das einen redundanten Code enthält, mit bekannten Projektionsdaten auf die Oberfläche eines Objekts projiziert und das Objekt mit aufprojiziertem Farbmuster mit einer Kamera aus einer von der Projektionsrichtung abweichenden Richtung aufgenommen. Durch Decodierung des Farbmusters an jedem Bildpunkt des Kamerabildes können die zugehörigen dreidimensionalen Koordinaten der Objektoberfläche mittels Triangulation bestimmt werden. Dieses Verfahren erlaubt es, einen Teilbereich der Oberfläche des Objekts mit einem Videobild zu rekonstruieren.

Aus der JP 2001108421 A ist ein 3D-Scanner zum dreidimensionalen Erfassen eines Objekts bekannt. Beim Scannen rotiert das Objekt zusammen mit einem Referenzobjekt, auf dem Markierungen angebracht sind. So werden unterschiedliche Ansichten des Objekts und des Referenzobjekts fotografiert, wobei die Fotos anhand der Markierungen an dem Referenzobjekt zu einem dreidimensionalen Computermodell zusammengesetzt werden. Nachteilig bei dem bekannten Verfahren ist die für einige Anwendungen unzureichende Übereinstimmung des Computermodells mit dem realen Objekt.

Aufgabe der vorliegenden Erfindung ist es, ein Verfahren sowie einen Rundum-Scanner anzugeben, mit denen ein Objekt und insbesondere ein Ohrabdruck in verhältnismäßig einfacher und kostengünstiger Weise mit der zur Herstellung einer Hörgeräte-Gehäuseschale erforderlichen Genauigkeit dreidimensional erfasst werden kann.

Diese Aufgabe wird gelöst durch ein Verfahren zur dreidimensionalen Erfassung eines Objekts mit den Merkmalen gemäß Anspruch 1. Ferner wird die Aufgabe gelöst durch einen Rundum-Scanner gemäß Anspruch 15.

Zur dreidimensionalen Erfassung eines Objekts gemäß der Erfindung sind wenigstens ein Projektor, eine Kamera sowie Mittel zur Rotation des Projektors und der Kamera relativ zu dem Objekt erforderlich. Durch den Projektor wird ein zweidimensionales Muster, z.B. ein Farbmuster, das einen redundanten Code enthält, mit bekannten Projektionsdaten auf die Oberfläche des Objekts projiziert. Das aufprojizierte Farbmuster wird anschließend mit einer Kamera, z.B. einer CCD-Kamera, aus einer von der Projektionsrichtung abweichenden Richtung aufgenommen. Durch Decodierung des Farbmusters an jedem Bildpunkt des Kamerabildes werden die zugehörigen dreidimensionalen Koordinaten der Objektoberfläche mittels Triangulation bestimmt.

Um eine dreidimensionale Rundum-Ansicht zu ermöglichen, rotiert das Objekt relativ zu dem Projektor und der Kamera. Vorzugsweise befindet sich das Objekt hierzu auf einem Drehteller. Zwischen zwei Aufnahmen dreht sich der Drehteller um einen vorgebbaren Winkel, so dass mehrere, z.B. 60, Objektbilder pro Umfang aufgenommen werden können. Bei einem Scan dreht sich das Objekt in der Regel einmal um 360° um die Rotationsachse. Soll bei einem Objekt lediglich ein Teilbereich digitalisiert werden, so kann das Objekt auch um einen Winkel kleiner als 360° gedreht werden. Weiterhin ist es auch möglich, dass zur Erhöhung der Genauigkeit des zu erzeugenden 3D-Modells mehr als eine vollständige Umdrehung bei der Erfassung eines Objekts ausgeführt wird. Ein Abbruchkriterium für den Scan sind dann beispielsweise fünf vollständig ausgeführte Umdrehungen des Objekts.

Damit aus diesen Einzelbildern eine zusammenhängende Rundum-Ansicht des Objekts erzeugt werden kann, ist es vorteilhaft, wenn die 3D-Daten der Einzelbilder auf ein gemeinsames Koordinatensystem bezogen werden. Für die hierfür erforderliche Kalibrierung sind gemäß der Erfindung an dem Scanner Markierungen angebracht, die beim Scannen ihre Position gegenüber dem Objekt nicht verändern. Bei der Verwendung eines Drehtellers befinden sich die Markierungen vorzugsweise auf dem Drehteller bzw. am Rand des Drehtellers. Die Markierungen sind derart gestaltet, dass in jedem Kamerabild eine bestimmte Anzahl dieser Markierungen sichtbar ist und aus diesen Markierungen der Drehwinkel des Objekts relativ zu dem Projektor und der Kamera eindeutig und mit der erforderlichen Genauigkeit entnommen werden kann. Eine höhere Anzahl an Markierungen erhöht dabei die Genauigkeit der 3D-Rekonstruktion.

Vorteilhaft wird die Lage der mit dem Objekt bewegten Markierungen bezüglich eines "Weltkoordinatensystems" einmal genau bestimmt und dem Auswertesystem mitgeteilt. Dann kann die relative Lage des Objekts zu dem Projektor und der Kamera bzw. der Drehwinkel des Drehtellers aus der Lage und der Codierung der im Objektbild aufgenommenen Markierungen in dem Koordinatensystem bestimmt werden. Nacheinander aufgenommene Einzelbilder bzw. die daraus gewonnenen 3D-Datensätze können dann einfach durch eine entsprechende Koordinatentransformation zur Gesamtansicht in dem "Weltkoordinatensystem" zusammengefügt werden.

Die Erfindung bietet den Vorteil, dass in einfacher und kostengünstiger Weise eine Synchronisation der Einzelbildaufnahmen mit der Drehbewegung des Objekts erreicht wird, ohne dass hierfür eine hochpräzise und dementsprechend teuere Mechanik erforderlich ist. Von einem Anwender des Rundum-Scanners sind keine Kalibrier- oder Justiervorgänge auszuführen, mit Ausnahme der Befestigung des zu vermessenden Objekts auf dem Drehteller. Es wurde somit eine einfach zu bedienende, aber trotzdem hochpräzise und kostengünstige Erfassungsmöglichkeit der 3D-Rundum-Oberfläche eines Objekts geschaffen. Der Rundum-Scanner gemäß der Erfindung ist daher z.B. vorzüglich zur Benutzung von einem Audiologen geeignet, der von einem Patienten einen Ohrabdruck erstellt und mittels des Scanners dreidimensional digitalisiert, so dass die gewonnenen Modelldaten per Datenübertragung (E-mail oder ähnliches) direkt zum Hersteller einer Gehäuseschale übermittelt werden können. Hierdurch werden Zeit und Kosten bei der Herstellung eines Hörgerätegehäuses gespart.

Bei einer Ausführungsform der Erfindung werden bei einer Umdrehung des Objekts relativ zu der Kamera und dem Projektor mehrere sich überlappende Objektbilder aufgenommen. Dabei sind dann in aufeinanderfolgenden Objektbildern jeweils mehrere derselben Markierungen sichtbar. Mit Hilfe der gemeinsam sichtbaren Markierungen werden die Objektbilder derart zusammengefügt, dass ein sogenannter Bildverbund entsteht. Eine genaue Vermessung der Markierungen ist hierfür nicht erforderlich, was die Herstellung des Systems vereinfacht.

Mittels eines als "Bündelausgleichung" bezeichneten und aus der Photogrammetrie bekannten Verfahrens können die relativen Kamerakoordinaten einer jeden Aufnahme ermittelt werden. Einige wenige im "Weltkoordinatensystem" vermessene Markierungen dienen dazu, den Bildverbund mit diesem in Bezug zu setzen. Nach diesem Schritt können die einzelnen Objektbilder dann einfach durch eine entsprechende Koordinatentransformation zur Gesamtansicht zusammengefügt werden. Um die Berechnung zu vereinfachen, liegen zwei Achsen des "Weltkoordinatensystems" in der durch den Drehteller aufgespannten Ebene und die dritte Achse des "Weltkoordinatensystems" fällt mit der Rotationsachse des Drehtellers zusammen.

Die Markierungen sind vorzugsweise so gestaltet, dass sie eine Codierung mit dem Umfang 1-n enthalten, z.B. in Form eines Binärcodes. Vorteilhaft enthalten die Markierungen einige Messpositionen (Ecken, Linien, Kreise oder ähnliches). Die in den Objektbildern aufgenommenen Markierungen werden in jedem Objektbild durch eine geeignete Bildverarbeitungs-Software automatisch detektiert, decodiert und vermessen. Vorzugsweise sind die Markierungen derart ausgeführt, dass für jedes Objektbild anhand der darin enthaltenen Markierungen eine eindeutige Zuordnung der räumlichen Position gegenüber der Kamera und dem Projektor möglich ist.

Eine Weiterbildung der Erfindung sieht vor, dass die Rotationsachse, um die das Objekt relativ zu dem Projektor und der Kamera rotiert, relativ zu dem Projektor und der Kamera geschwenkt werden kann. Bei der Verwendung eines Drehtellers wird dies am einfachsten dadurch erreicht, dass der Drehteller in wenigstens einer Richtung um einen bestimmten Winkel gekippt wird. Dies bringt insbesondere Vorteile bei der Digitalisierung von Ohrabdrücken, da diese verhältnismäßig zerklüftet sein können. Durch das Schwenken der Rotationsachse können Abschattungen und damit Lücken oder Ungenauigkeiten in dem dreidimensionalen Computermodell verhindert werden.

Bei einer vorteilhaften Ausführungsform der Erfindung sind die Markierungen derart angeordnet und ausgestaltet, dass aus jedem Objektbild neben dem Drehwinkel auch der Winkel, um den die Rotationsachse gegenüber einer Ausgangslage geschwenkt ist, erfasst werden kann. Als Ausgangslage kann dabei die Lage der Rotationsachse in dem vorausgehenden Objektbild oder einer Ursprungsposition dienen.

Bei einer alternativen Weiterbildung der Erfindung sind wenigstens zwei versetzt zueinander angeordnete Kameras vorhanden, so dass das Objekt gleichzeitig aus verschiedenen Blickwinkeln aufgenommen werden kann. Die Kameras sind bezüglich der Rotationsachse des zu erfassenden Objekts in unterschiedlicher Höhe angebracht, so dass auch Hinterschneidungen des Objekts, die bei der Verwendung nur einer Kamera zu Fehlstellen in dem Computermodell führen würden, durch die weitere Kamera erfasst werden können. Auf eine Schwenkbewegung des Rotationstellers relativ zu den Kameras kann dadurch verzichtet werden. Vorteilhaft wird neben einer zweiten Kamera auch ein zweiter Projektor verwendet, so dass jeweils durch ein Kamera-Projektor-Paar Objektbilder erzeugt werden.

Die Selbstkalibrierungseigenschaft eines Rundum-Scanners gemäß der Erfindung hat den Vorteil, dass alle einzelnen 3D-Objektbilder einfach zu einem 3D-Rundumbild zusammengesetzt werden können. Dabei werden keine hohen Anforderungen an die Konstanz der Drehbewegung gestellt. Eine Synchronisation der Drehbewegung mit den Bildaufnahmen ist nicht erforderlich. Es kann daher auf eine kostengünstige Mechanik zurückgegriffen werden. Die Genauigkeit der 3D-Erfassung kann leicht durch Erhöhung der Bildzahl pro Umdrehung erhöht werden.

Durch eine hohe Anzahl der Messdaten und insbesondere durch sich überlappende Objektbilder steigt die Robustheit und Genauigkeit der Messung signifikant an.

Die Erfindung wird nachfolgend anhand von Ausführungsbeispielen beschrieben. Es zeigen:
Figur 1 eine Prinzipskizze der 3D-Erfassung eines Objekts mittels farbcodiertem, strukturiertem Licht,
Figur 2 das Prinzipbild eines Scanners gemäß der Erfindung,
Figur 3 einen Scanner gemäß der Erfindung in perspektivischer Ansicht,
Figur 4 den Scanner gemäß Figur 3 mit einer gegenüber Figur 3 geschwenkten Rotationsachse,
Figur 5 den Scanner gemäß den Figuren 3 und 4 mit einem Gehäuse, und
Figur 6 eine alternative Ausführungsform eines Scanners mit zwei Kameras.

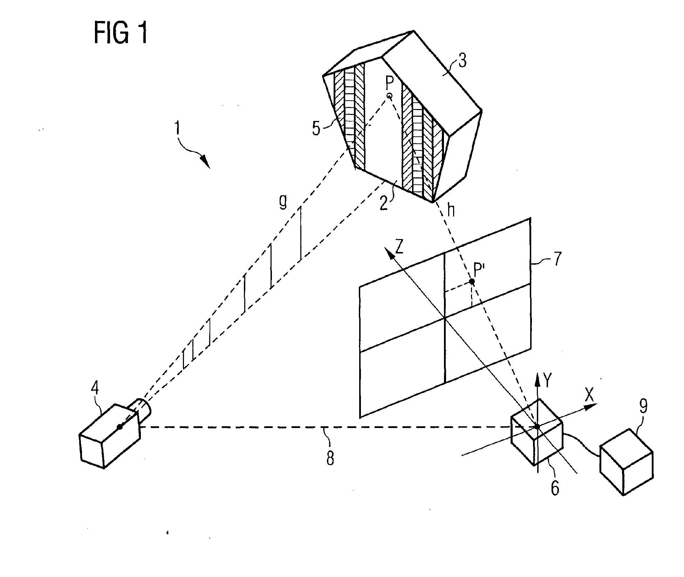

In Figur 1 ist eine Vorrichtung 1 dargestellt, die dazu dient, die dreidimensionalen Objektkoordinaten einer Oberfläche 2 eines zu erfassenden Objekts 3 zu bestimmen.

Die Vorrichtung 1 weist einen Projektor 4 auf, der ein Farbmuster 5 auf die Oberfläche 2 des zu erfassenden Objekts 3 projiziert. In dem in Figur 1 dargestellten Fall ist das Farbmuster 5 aus einer Reihe von nebeneinander liegenden Farbstreifen zusammengesetzt. Es ist jedoch auch denkbar, ein zweidimensionales Farbmuster anstelle des in Figur 1 dargestellten eindimensionalen Farbmusters 5 zu verwenden.

Bei dem in Figur 1 dargestellten Ausführungsbeispiel kann jedem Punkt P der Oberfläche 2 des Objekts 3 eine Projektionsebene g zugeordnet werden. Durch das Farbmuster 5 sind somit Projektionsdaten codiert. Das auf die Oberfläche 2 des Objekts 3 projizierte Farbmuster 5 wird durch eine Kamera 6 in ein Abbild 7 umgewandelt, in dem der Punkt P auf der Oberfläche 2 in den Punkt P' transformiert wird. Bei bekannter Anordnung des Projektors 4 und der Kamera 6, insbesondere bei bekannter Länge einer Basisstrecke 8, können durch Triangulation die dreidimensionalen Raumkoordinaten des Punktes P auf der Oberfläche 2 berechnet werden. Die dazu erforderliche Datenreduktion und Auswertung wird von einer Auswerteeinheit 9 vorgenommen.

Um die Bestimmung der dreidimensionalen Raumkoordinaten des Punktes P auf der Oberfläche 2 aus einem einzelnen Abbild 7 auch dann zu ermöglichen, wenn die Oberfläche 2 des Objekts 3 Tiefensprünge und Verdeckungen aufweist, ist das Farbmuster 5 so konstruiert, dass die Codierung der Projektionsebenen g möglichst robust gegen Fehler ist. Ferner können durch die Codierung Fehler, die auf der Färbung des Objektes beruhen, eliminiert werden.

Bei den in Figur 1 dargestellten Ausführungsbeispielen werden die Farben des Farbmusters 5 durch das RGB-Modell beschrieben. Die Änderungen der Farbwerte des Farbmusters 5 erfolgen durch Änderungen der Farbwerte in den einzelnen Farbkanälen R, G und B.

Das Farbmuster soll dann folgenden Bedingungen genügen:
- In jedem Farbkanal werden lediglich zwei Farbwerte verwendet. Insbesondere wird in jedem Farbkanal jeweils der Minimalwert und der Maximalwert verwendet, so dass im RGB-Modell insgesamt acht Farben zur Verfügung stehen.
- Innerhalb eines Codeworts weist jeder Farbkanal wenigstens eine Farbänderung auf. Diese Bedingung ermöglicht das Decodieren der einzelnen Codewörter.
- Nebeneinander liegende Farbelemente unterscheiden sich in wenigstens zwei Farbkanälen. Diese Bedingung dient insbesondere dazu, die Fehlertoleranz insbesondere gegen Tiefensprünge zu gewährleisten.
- Die einzelnen Codewörter des Farbmusters 5 weisen eine nicht-triviale Hamming-Distanz auf. Auch diese Bedingung dient dazu, die Fehlertoleranz beim Decodieren der Projektionsebenen g zu erhöhen.
- Auch die Farbänderungen werden zu Codewörtern mit einer nicht-trivialen Hamming-Distanz zusammengefasst.

Nachfolgend sei ein Beispiel für das Farbmuster 5 genannt, das den oben genannten fünf Bedingungen genügt. Dieses Farbmuster 5 bezieht sich auf das RGB-Modell mit einem roten Farbkanal R, einem grünen Farbkanal G und einem blauen Farbkanal B. Da Farbwerte in jedem Farbkanal nur jeweils den Minimalwert und Maximalwert annehmen dürfen, stehen insgesamt acht Mischfarben zur Verfügung, denen jeweils die folgenden Zahlen zugeordnet werden:

| | |
|---|---|
| Schwarz | 0 |
| Blau | 1 |
| Grün | 2 |
| Cyan | 3 |
| Rot | 4 |
| Magenta | 5 |
| Gelb | 6 |
| Weiß | 7 |

Für die Codewörter der Farbwerte wurde eine Länge von vier Farbstreifen gewählt, wobei sich benachbarte Codewörter jeweils mit drei Farbstreifen überlappen.

Auch den Farbänderungen wurden Zahlenwerte zugeordnet. Da in jedem der drei Farbkanäle der Farbwert gleich bleiben, abfallen oder ansteigen kann, ergeben sich insgesamt 27 verschiedene Farbänderungen der Mischfarbe, denen jeweils eine Zahl zwischen 0 und 26 zugeordnet wurde. Die Länge der den Farbänderungen zugeordneten Codewörtern wurde gleich drei Farbänderungen gewählt, wobei sich benachbarte Codewörter jeweils mit zwei Farbänderungen überlappen.

Durch einen Suchalgorithmus wurde die folgende Zahlenreihe gefunden, die ein Ausführungsbeispiel des Farbmusters 5 beschreibt, das den oben genannten fünf Bedingungen genügt:
1243070561217414270342127216534171614361605306352717072416305 250747147065035603634743506172524253607

In dem angegebenen Ausführungsbeispiel besteht das erste Codewort aus den Ziffern 1243, das zweite Codewort aus den Ziffern 2430 und das dritte Codewort aus den Ziffern 4307. Das gezeigte Ausführungsbeispiel stellt eine sehr robuste Codierung dar.

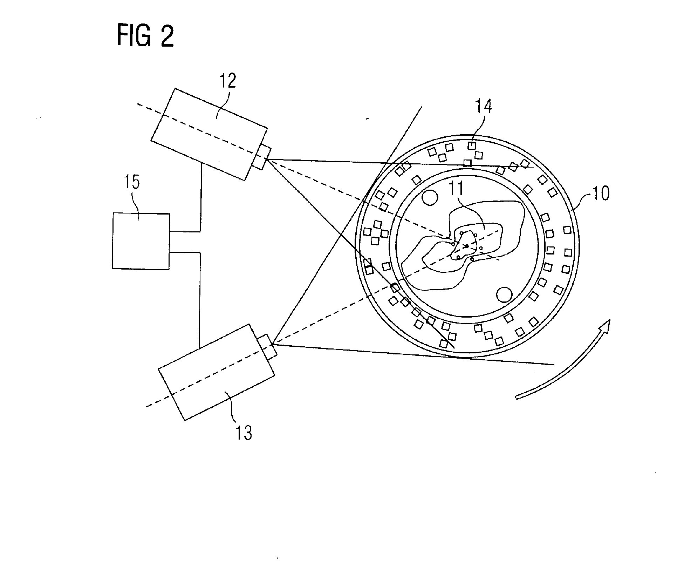

In Figur 2 ist das Prinzipbild eines Rundum-Scanners gemäß der Erfindung veranschaulicht. Der Scanner umfasst einen Drehteller 10, der um seine Symmetrieachse drehbar gelagert ist. Auf dem Drehteller ist ein nach den individuellen anatomischen Gegebenheiten eines Hörgeräteträgers gearteter Ohrabdruck 11 befestigt. Der Ohrabdruck 11 soll zur Herstellung einer individuell geformten Schale eines in dem Ohr tragbaren Hörgerätes digitalisiert werden. Das Erfassen des Ohrabdrucks erfolgt mittels codierter Beleuchtung und Triangulation. Hierzu umfasst der Rundum-Scanner einen Projektor 12, der ein farbcodiertes Muster auf die Oberfläche des Ohrabdrucks 11 projiziert. Das auf die Oberfläche des Ohrabdrucks 11 projizierte Farbmuster wird durch eine CCD-Kamera 13 in ein Abbild des Ohrabdrucks 11 umgewandelt. Durch die Drehbewegung des Drehtellers 10 kann eine Vielzahl derartiger Abbildungen aus unterschiedlichen Betrachtungswinkeln aufgenommen werden. Damit den einzelnen Abbildungen der jeweilige Betrachtungswinkel zugeordnet werden kann, sind am äußeren Rand des Drehtellers 10 Markierungen 14 angebracht. Neben dem Ohrabdruck 11 wird in jedem Abbild auch eine Anzahl dieser Markierungen 14 erfasst. Die Abbilder der Markierungen 14 werden in den Objektbildern durch einen Rechner 15 mit einer geeigneten Bildverarbeitungs-Software automatisch detektiert, decodiert und vermessen. Anhand der daraus gewonnenen Winkelinformationen wird aus den einzelnen Abbildungen ein dreidimensionales Computermodell des Ohrabdruckes 11 errechnet. Der Rechner 15 ist vorzugsweise nicht Teil des eigentlichen Rundum-Scanners, d.h. nicht mit dem Drehteller 10, dem Projektor 12 und der Kamera 13 in einem gemeinsamen Gehäuse angeordnet. Vielmehr kann als Rechner 15 ein externer, leistungsfähiger PC mit einer geeigneten Software dienen. Der Rundum-Scanner verfügt dann über eine Schnittstelle zur Verbindung mit dem Rechner 15.

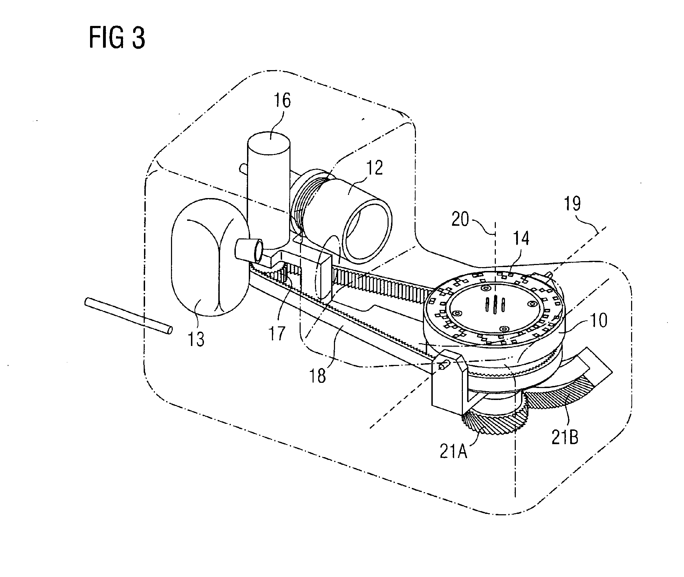

Figur 3 zeigt den in Figur 2 im Prinzipbild veranschaulichten Rundum-Scanner in perspektivischer Ansicht. Auch daraus sind der Drehteller 10, ein Projektor 12 sowie eine CCD-Kamera 13 in der jeweiligen Lage zueinander ersichtlich. Weiterhin ist in Figur 3 auch die Antriebseinheit für den Drehteller 10 zu entnehmen. Diese umfasst einen Motor 16, der über ein Zahnrad 17 und einen Zahnriemen 18 den Drehteller 10 antreibt. Weiterhin ist in Figur 3 ein Mechanismus dargestellt, durch den bei dem Drehteller 10 neben der Rotationsbewegung auch eine Schwenkbewegung ermöglicht wird. Die Schwenkachse 19 verläuft im Ausführungsbeispiel durch den Schnittpunkt der Rotationsachse 20 mit der Oberfläche des Drehtellers 10. Auch die Schwenkbewegung erfolgt im Ausführungsbeispiel automatisch durch einen elektrischen Antrieb, wobei bei der gezeigten Ausführungsform der Motor 16 sowohl die Rotationsbewegung als auch die Schwenkbewegung bewirkt. Durch die Rotation des Drehtellers 10 wird nämlich ein damit verbundenes Zahnrad 21A angetrieben, welches in ein fest in dem Gehäuse des Scanners verankertes Zahnstück 21B greift und dadurch zu der Schwenkbewegung der Antriebseinheit mit dem Motor 16 und dem Zahnriemen 18 führt. Weiterhin ersichtlich sind die am Rand des Drehtellers 10 angebrachten Markierungen 14, mittels derer der genaue Drehwinkel des Drehtellers 10 und damit eines darauf gelagerten Objekts (vgl. Figur 2) bezüglich des Projektors 12 und der Kamera 13 aus den erzeugten Abbildungen ermittelbar ist.

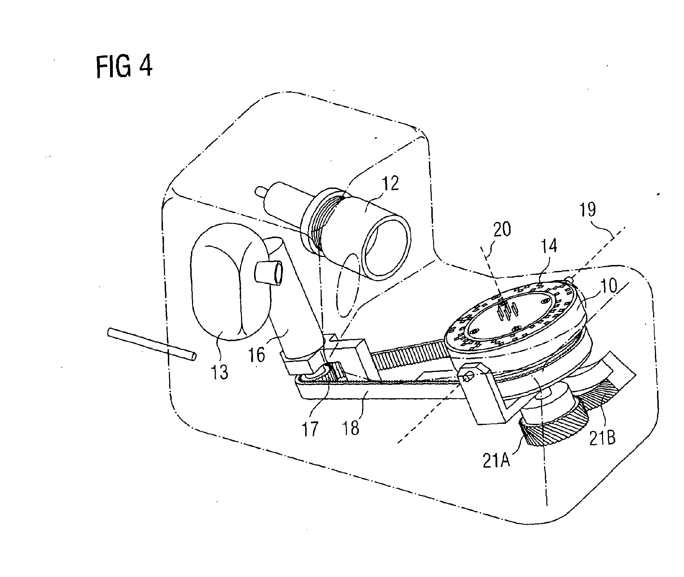

Vorteilhaft befindet sich die Rotationsachse zu Beginn der Erfassung eines Objekts in der dafür vorgesehenen Ausgangslage. Dies kann z.B. dadurch bewerkstelligt werden, dass an dem Gehäuse des Rundum-Scanners ein Gehäusedeckel (nicht dargestellt) schwenkbar befestigt ist. Vor dem Platzieren eines Objekts auf dem Drehteller 10 muss dieser Gehäusedeckel zunächst geöffnet werden. Beim Öffnen dieses Gehäusedeckels wird dann die gesamte Rotationseinheit mit dem Motor 16 und dem Drehteller 10 durch eine entsprechende Mechanik (nicht dargestellt) in ihre Ausgangsposition überführt. Zu Beginn eines Scans befindet sich somit der Drehteller 10 in der in Figur 3 veranschaulichten Ausgangslage, bis er schließlich nach mehreren Umdrehungen die in Figur 4 gezeigte Endposition einnimmt. In der Endposition wird der Motor 16 selbsttätig gestoppt. Anhand der Markierungen in den Objektbildern lassen sich jedem Bild der Drehwinkel und der Winkel, um den der Drehteller 10 aus seiner Ausgangslage geschwenkt ist, eindeutig entnehmen. So kann aus den einzelnen Objektbildern ein 3D-Modell mit hoher Genauigkeit erstellt werden.

Alternativ kann der Drehteller 10 zum Ausführen der Schwenkbewegung auch mit einem Zweiten Motor (nicht dargestellt) verbunden sein. Die Schwenkbewegung kann dann auch durch den Rechner 15 gesteuert werden, so dass die Anzahl der Umdrehungen des Drehtellers, bei der dieser von einer Ausgangslage in eine Endlage schwenkt, variabel ist.

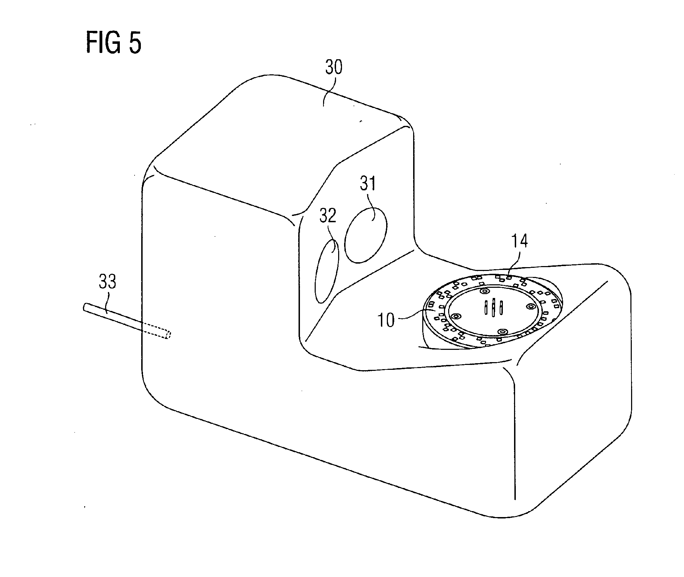

Bei dem Rundum-Scanner gemäß Figur 3 sind der Drehteller, die Antriebseinheit des Drehtellers, der Projektor und die Kamera in einem gemeinsamen, in Figur 5 dargestellten Gehäuse 30 untergebracht. Dadurch stellt der Rundum-Scanner eine kompakte und einfach zu handhabende Einheit dar. Auch die Bedienung ist denkbar einfach, da der Benutzer neben der Befestigung des Untersuchungsobjekts auf dem Drehteller 10 keine weiteren Kalibrier- oder Justiervorgänge durchzuführen hat. Weiterhin sind Figur 5 noch die beiden Gehäuseöffnungen 31 und 32 für den Projektor und die Kamera zu entnehmen. Außerdem umfasst der Rundum-Scanner noch ein Kabel 33 zur Verbindung mit einem Rechner.

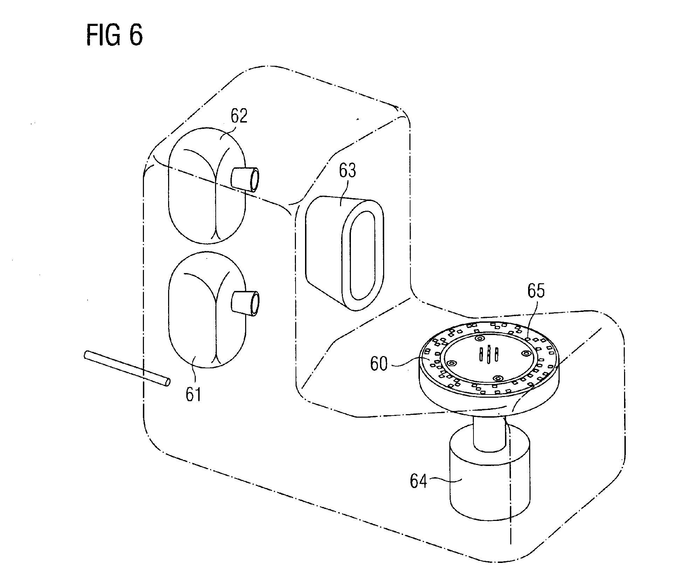

Eine alternativer Ausführungsform eines Rundum-Scanners gemäß der Erfindung zeigt Figur 6. Im Unterschied zu den vorherigen Ausführungsbeispielen ist der Drehteller 60 bei dieser Ausführungsform nicht schwenkbar. Um dennoch auch komplizierte Objekte mit Hinterschneidungen erfassen zu können, weist der Scanner zwei übereinander angeordnete Kameras 61 und 62 auf, die das Objekt somit aus unterschiedlichen Blickrichtungen erfassen. Weiterhin ist der Projektor 63 nicht als punktförmige Strahlenquelle ausgebildet. Vielmehr gibt er ein codiertes Muster ausgehend von einer vertikal verlaufenden Linie ab. Dadurch ist die Projektion des Musters auf alle Bereiche des Objekts, die von den Kameras erfasst werden, gewährleistet. Alternativ können auch mehrere Projektoren mit punktförmiger Strahlenquelle (nicht dargestellt) verwendet werden. Durch die Verwendung mehrerer Kameras wird eine Schwenkbewegung des Drehtellers 60 hinfällig und die Antriebseinheit lässt sich gegenüber vorausgehenden Ausführungsbeispielen vereinfachen. So wird im Ausführungsbeispiel gemäß Figur 6 der Drehteller 60 direkt (ohne Zwischenschaltung eines Zahnriemens) angetrieben.

Auch bei dem Rundum-Scanner gemäß Figur 6 sind alle Komponenten von einem gemeinsamen Gehäuse umfasst, so dass auch dieser eine kompakte und einfach zu handhabende Einheit bildet. Weiterhin kann auf kostengünstige, im Markt verfügbare Komponenten (CCD-Kameras, Projektor) und insbesondere auf eine einfache Mechanik zurückgegriffen werden.

## Patentansprüche

1. Verfahren zur dreidimensionalen Erfassung eines Objekts (3; 11) mit folgenden Schritten:
- Bereitstellen des zu erfassenden Objekts (3; 11), eines Projektors (4; 12; 63), einer Kamera (6; 13; 61, 62) sowie Mitteln zur Rotation des Projektors (4; 12; 63) und der Kamera (6; 13; 61, 62) relativ zu dem Objekt (3; 11),
- Bereitstellen von Markierungen (14; 65) mit während der Rotation gleichbleibender Lage relativ zu dem Objekt (3; 11),
- Projektion eines Musters (5) auf das zu erfassende Objekt (3; 11) mittels des Projektors (4; 12; 63),
- Aufnahme eines Objektbildes (7) mittels der Kamera (6; 13; 61, 62), wobei in dem Objektbild (7) das Abbild wenigstens einer Markierung (14; 65) erfasst wird,
- Wiederholtes Verstellen des Projektors (4; 12; 63) und der Kamera (6; 13; 61, 62) relativ zu dem Objekt (3; 11) mit jeweiliger Projektion des Musters (5) und Aufnahme eines Objektbildes (7), so lange, bis ein Abbruchkriterium erreicht ist,
- Automatisches Zusammenfügen der Objektbilder oder aus diesen gewonnener Daten anhand der in den Objektbildern enthaltenen Abbilder der Markierungen (14, 65) und Erstellen eines dreidimensionalen Objektmodells.

2. Verfahren nach Anspruch 1, wobei den Objektbildern (7) oder aus diesen gewonnener Daten anhand der in den Objektbildern enthaltenen Abbildern der Markierungen (14; 65) jeweils die räumliche Position des Objekts (3; 11) relativ zu dem Projektor (4; 12; 63) und der Kamera (6; 13; 61, 62) zugeordnet wird.

3. Verfahren nach Anspruch 1 oder 2, wobei aus den Objektbildern 3D-Daten des Objekts (3; 11) in Bezug auf ein Koordinatensystem (X, Y, Z) ermittelt werden.

4. Verfahren nach Anspruch 1 oder 2, wobei bei einer Umdrehung des Objekts (3; 11) um eine Rotationsachse (20) mehrere sich überlappende Objektbilder aufgenommen werden.

5. Verfahren nach Anspruch 4, wobei Abbilder derselben Markierungen (14; 65) in zwei aufeinanderfolgenden Objektbildern enthalten sind.

6. Verfahren nach einem der Ansprüche 1 bis 5, wobei die Markierungen (14; 65) kodiert sind.

7. Verfahren nach Anspruch 6, wobei zur Kodierung ein Binärcode verwendet wird.

8. Verfahren nach einem der Ansprüche 1 bis 7, wobei das Muster (5) ein strukturiertes Farbmuster ist.

9. Verfahren nach Anspruch 8, wobei in dem Farbmuster (5) Projektionsdaten mit Hilfe eines redundanten Codes codiert werden.

10. Verfahren nach einem der Ansprüche 1 bis 9, wobei eine Rotationsachse (20), um die das Objekt (3; 11) relativ zu dem Projektor (4; 12; 63) und der Kamera (6; 13; 61, 62) rotiert, während der Erfassung des Objekts (3; 11) relativ zu dem Projektor (4; 12; 63) und der Kamera (6; 13; 61, 62) automatisch geschwenkt wird.

11. Verfahren nach Anspruch 10, wobei zwischen der Aufnahme aufeinanderfolgender Objektbilder sowohl eine Rotations- als auch eine Schwenkbewegung ausgeführt wird.

12. Verfahren nach Anspruch 10 oder 11, wobei zum Schwenken der Rotationsachse (20) der Drehteller (10), auf dem das Objekt (11) gelagert ist, gegenüber dem Projektor (12) und der Kamera (13) automatisch geschwenkt wird.

13. Verfahren nach einem der Ansprüche 10 bis 12, wobei den Objektbildern oder aus diesen gewonnener Daten anhand der in den Objektbildern enthaltenen Abbilder der Markierungen (14) jeweils ein Schwenkwinkel zugeordnet wird, um den die Rotationsachse (20) gegenüber einer Ausgangslage geschwenkt ist.

14. Verfahren nach einem der Ansprüche 1 bis 9, wobei Objektbilder von zwei versetzt angeordneten Kameras (61, 62) aufgenommen werden.

15. Rundum-Scanner zur dreidimensionalen Erfassung eines Objekts (3; 11) mit einem Projektor (4; 12, 63) zur Projektion eines Musters (5) auf das zu erfassende Objekt (3; 11), einer Kamera (6; 13; 61, 62) zum Erfassen von Objektbildern und Mitteln zur Rotation des Objekts (3; 11) relativ zu dem Projektor (4; 12; 63) und der Kamera (6; 13; 61, 62), wobei Markierungen (14; 65) vorhanden sind mit während der Rotation gleichbleibender Lage relativ zum Objekt (3; 11), wobei Abbilder der Markierungen in den Objektbildern vorhanden sind und wobei unter unterschiedlichen Drehwinkeln des Objekts (3; 11) relativ zu dem Projektor (4; 12; 63) und der Kamera (6; 13; 61, 62) erzeugte Objektbilder oder aus diesen gewonnene Daten anhand der in den Objektbildern vorhandenen Abbildungen der Markierungen (14; 65) zu einem dreidimensionalen Objektmodell zusammenfügbar sind.

16. Rundum-Scanner nach Anspruch 15, wobei aus den Abbildern der Markierungen (14; 65) die räumliche Position des Objekts (3; 11) relativ zu dem Projektor (4; 12; 63) und/oder der Kamera (6; 13; 61, 62) ermittelbar ist.

17. Rundum-Scanner nach Anspruch 16, wobei das Objekt (11) während eines Scans auf einem Drehteller (10; 60) gelagert ist.

18. Rundum-Scanner nach Anspruch 17, wobei die Markierungen (14; 65) auf dem Drehteller (10; 60) angeordnet sind.

19. Rundum-Scanner nach einem der Ansprüche 15 bis 18, wobei in jedem Objektbild das Abbild mehrerer Markierungen (14; 65) vorhanden ist.

20. Rundum-Scanner nach einem der Ansprüche 17 bis 19, wobei der Projektor (12; 63), die Kamera (13; 61, 62), der Drehteller (10; 60) und die Antriebseinheit für den Drehteller (10; 60) als kompakte Baueinheit mit einem gemeinsamen Gehäuse (30) ausgebildet ist.

21. Rundum-Scanner nach einem der Ansprüche 17 bis 20, wobei Mittel zum Schwenken der Rotationsachse (20) des Objekts (11) relativ zu dem Projektor (12) und der Kamera (13) vorhanden sind.

22. Rundum-Scanner nach Anspruch 21, wobei aus den Abbildern der Markierungen (14) ein Schwenkwinkel ermittelbar ist, um den die Rotationsachse (20) gegenüber einer Ausgangslage geschwenkt ist.

23. Rundum-Scanner nach Anspruch 21 oder 22, wobei die Rotationsachse (20) automatisch schwenkbar ist.

24. Rundum-Scanner nach einem der Ansprüche 21 bis 23, wobei zum Schwenken der Rotationsachse (20) der Drehteller (10) schwenkbar gelagert ist.

25. Rundum-Scanner nach Anspruch 24, wobei der Drehteller (10) zum automatischen Schwenken der Rotationsachse (20) mit einem Antrieb versehen ist.

26. Rundum-Scanner nach Anspruch 25, wobei ein Antriebsmechanismus zur Rotation und zum Schwenken des Drehtellers (10) mit einem einzigen Motor (16) vorhanden ist.

27. Rundum-Scanner nach einem der Ansprüche 15 bis 20, wobei eine erste und eine zweite Kamera (61, 62) vorhanden ist zum erfassen von Objektbildern aus unterschiedlichen Richtungen.

28. Rundum-Scanner nach Anspruch 27, wobei ein erster und ein zweiter Projektor vorhanden ist zur Projektion von zweidimensionalen Mustern aus unterschiedlichen Richtungen auf das zu erfassende Objekt.

29. Verwendung des Verfahrens nach einem der Ansprüche 1 bis 14 oder des Rundum-Scanners nach einem der Ansprüche 15 bis 28 zum dreidimensionalen Erfassen von Ohrabdrücken.
